# EUROPÄISCHE PATENTSCHRIFT

(11) **EP 0 842 733 B1**
(45) Veröffentlichungstag und Bekanntmachung des Hinweises auf die Patenterteilung: **02.03.2005**
(21) Anmeldenummer: 97116188.0
(22) Anmeldetag: 17.09.1997
(51) Int. Cl.: B23P 19/06, F16B 37/06

(54) **Verfahren zur Anbringung eines Funktionselementes, Funktionselement, Zusammenbauteil und Matrize**
Method for attaching a functional element, functional element, mounting assembly and die
Procédé pour attacher un élément fonctionnel, élément fonctionnel, ensemble de montage et matrice

(30) Priorität: 19.11.1996 DE 19647831
(43) Veröffentlichungstag der Anmeldung: 20.05.1998
(73) Patentinhaber: Profil Verbindungstechnik GmbH & Co. KG, 61381 Friedrichsdorf (DE)
(72) Erfinder: Müller, Rudolf, 60437 Frankfurt/Main (DE)
(74) Vertreter: Morgan, James G.

(56) Entgegenhaltungen:
- EP-A- 0 438 105
- EP-A- 0 759 510
- DE-A- 19 508 632
- DE-U- 29 509 439
- US-A- 3 556 189
- US-A- 3 871 264
- US-A- 4 637 766
- US-A- 5 174 018
- US-A- 5 339 509

## Beschreibung

Die vorliegende Erfindung betrifft ein Verfahren zur dichten, insbesondere flüssigkeits- und/oder gasdichten Anbringung eines Funktionselementes an ein Blechteil entsprechend dem Oberbegriff von Anspruch 1, bei dem das Element das Blechmaterial nicht durchdringt, jedoch an diesem Blechteil zur Übertragung von Axialkräften und vorzugsweise auch Drehmomenten befestigt ist. Weiterhin betrifft die vorliegende Erfindung Funktionselemente nach den Oberbegriffen der Ansprüche 6 und 15, sowie Matrizen zur Anwendung bei dem Verfahren für die Anbringung des Funktionselementes an dem Blechteil, nach den, Oberbegriffen der Ansprüche 23 und 24.

Ein Verfahren entsprechend dem Oberbegriff von Anspruch 1 ist aus der US-A-5,339,509 bekannt, während ein Funktionselement entsprechend dem Oberbegriff von Anspruch 6 und dem Oberbegriff von Anspruch 15 aus der US-A-3,871,264 hervorgeht. Das Dokument US-A-5,174, 018 offenbart eine Matrize entsprechend dem Oberbegriff des Anspruchs 23. Insbesondere, jedoch nicht ausschließlich im Karosseriebau besteht die Notwendigkeit einer absolut flüssigkeitsdichten und vorzugsweise auch gasdichten Verbindung zwischen einem einen Schafttteil und einem Kopfteil aufweisenden Funktionselement und einem Blechteil zu schaffen. Beispielsweise werden im Bodenbereich eines Fahrzeuges Stifte vorgesehen, die die Funktionselemente darstellen, an denen Teppiche befestigt werden sollen. Es muß auf alle Fälle verhindert werden, daß von unten, beispielsweise von der Straße kommendes Wasser durch die aufgrund der Durchlochung des Bodenbleches bei der Anbringung des Funktionselementes geschaffenen Kapillarspalten aufsteigt und zur Korrosion des Bodenbleches bzw. des Funktionselementes oder zu Feuchtigkeitsschäden an den Teppichen führt.

Es ist zwar bei sehr genauer Prozeßführung möglich, bei blanken Blechteilen oder bei Blechteilen mit metallischen Überzügen und bei Anwendung von bereits bekannten Stanzund Nietbolzen die Verbindung zwischen dem Funktionselement und dem Blechteil flüssigkeits- und/oder gasdicht zu gestalten. Hierdurch wird die Massenherstellung von Produkten zu vertretbaren Kosten aber nicht möglich, insbesondere dann nicht, wenn bei langen Herstellungsserien die Werkzeuge Verschleiß unterliegen und die Blechteile mit Toleranzen behaftet sind.

Die flüssigkeits- und/oder gasdichte Anbringung von Befestigungselementen an Blechteilen, die mit Kunststoff-, Folien- und/oder Lacküberzügen ein- oder beidseitig beschichtet sind, stellt eine besondere Schwierigkeit dar, da die Beschichtung häufig bei dem Einsatzverfahren beschädigt wird und hierdurch Kapillarspalten erzeugt werden. Darüber hinaus ist bei anschließenden thermischen Behandlungen, beispielsweise bei der Anbringung von Lack in einer beheizten Kammer, eine Lockerung der Verbindung zu erwarten, die auch zu ungeahnten Kapillarspalten führen kann.

Eine absolut flüssigkeits- und/oder gasdichte Verbindung konnte bisher eigentlich nur gewährleistet werden bei sogenannten Schweißelementen, die an die Blechoberfläche stumpfgeschweißt werden. Die Verwendung von anschweißbaren Funktionselementen ist jedoch mit moderner Prozeßführung bei der Blechverarbeitung nicht ohne weiteres vereinbar, da es den Ablauf der Blechverarbeitung, die im wesentlichen in Pressen stattfindet, stört, sozusagen einen fremden Schritt darstellt. Auch ist die während des Schweißens erzeugte Wärme vielfach störend, da sie zu einer lokalen Herabsetzung der Eigenschaften des Blechteiles führen kann. Bei beschichteten Blechen ist die Anwendung eines Schweißverfahrens besonders schwierig, da die Beschichtung durch das wärmeintensive Schweißverfahren lokal beschädigt wird. Bei Blechteilen, die mit Kunststoff-, Folien- und/oder Lackbeschichtungen versehen sind, ist es darüber hinaus schwierig, stets für eine gute elektrische Verbindung zwischen dem Blechteil und dem Element bei dem Stumpfschweißverfahren zu sorgen. Wenn dies gelingt, so werden auch teilweise giftige Gase aufgrund der Prozeßwärme freigesetzt.

Es ist manchmal auch wichtig, Funktionselemente in Form von Hohlkörperelementen mit einem hohlen Körperteil, beispielsweise in Form eines Mutterelementes, mit einem Blechteil zu verbinden, ohne daß ein Gas oder eine Flüssigkeit durch das Blechteil in das Hohlkörperelement eindringen kann. Beispielsweise treten solche Forderungen ebenfalls beim Karosseriebau oder bei der Herstellung von Spritzgußteilen mit Einlagen in der Form von mit Mutterelementen bestückten Blechteilen auf, wo die Spritzgußmasse durch das Blechteil nicht in das Gewinde gelangen darf.

Auch bei manchen Ausführungsformen der US-A-5,339,509 dürfte es möglich sein, ein Funktionselement an ein Blechteil verdrehsicher anzubringen, ohne das Blechteil zu perforieren. Bei der US-A-5,339,509 kommt aber eine relativ komplizierte Matrize mit beweglichen Teilen zur Anwendung, die deshalb notwendig sind, weil das Kopfteil des Funktionselements bei der Anbringung am Blechteil mit verformt wird und es mangels solcher beweglichen Elemente schwierig wäre, das Zusammenbauteil bestehend aus dem Funktionselement und dem Blechteil aus der Matrize zu entfernen. Bei der US-A-5,339,509 findet die Vernietung zwischen dem Kopfteil des Funktionselements und dem Blechteil ausschließlich im Bereich der Außenseite des Kopfteils statt.

Aufgabe der Erfindung ist es, ein Verfahren bzw. ein Funktionselement und ein Zusammenbauteil zur Verfügung zu stellen, bei dem eine zumindest im wesentlichen stets flüssigkeits- und vorzugsweise auch gasdichte Verbindung zwischen dem Funktionselement und dem Blechteil bei einer wärmearmen Vorgehensweise gewährleistet ist, und zwar ohne daß eine evtl. vorhandene Beschichtung des Blechteiles so beschädigt wird, daß die Funktionsfähigkeit oder das erwünschte Aussehen des Zusammenbauteiles nicht mehr gegeben ist. Weiterhin soll das Verfahren ohne besonderen Aufwand bei der Massenherstellung von Blechteilen unter Anwendung von preisgünstigen Werkzeugen und über lange Produktionsserien gewährleistet sein.

Zur Lösung dieser Aufgabe wird ein Verfahren der eingangs genannten Art dadurch weitergebildet, daß zur Erzeugung der formschlüssigen Verbindung das Kopfteil bzw. das Körperteil mit einem an seiner dem Blechteil zugewandten Stirnseite offenen Hohlraum ausgebildet wird, der mindestens ein Hinterschneidungsmerkmal aufweist, und daß mittels der Umformmatrize das Blechmaterial mit diesem Hinterschneidungsmerkmal verhakt wird.

Dadurch, daß das Blechteil bei der Anbringung des Funktionselementes nicht durchlocht wird, verbleibt das Blechteil sozusagen als geschlossene Membran erhalten, so daß keine Kapillarspalten zwischen den beiden Seiten des Blechteiles entstehen können. Es ist zwar auf diese Weise nicht ohne weiteres möglich, eine Verbindung zwischen dem Funktionselement und dem Blechteil zu erzeugen, die den gleichen Widerstand gegen das Herausziehen des Funktionselements aufweist wie bei einer Verbindung, bei der das Kopfteil des Elementes auf der anderen Seite vom Blech angeordnet ist wie das Schaftteil. Man kann jedoch durchaus ausreichende Festigkeiten der Verbindung erreichen, die bei vielen der Anwendungen, die existieren, bei denen die maximale Festigkeit der Verbindung nicht gefordert ist, vollkommen ausreichen, beispielsweise bei der Anbringung von Teppichen in Fahrzeugen, bei der Anbringung von Himmelverkleidungen in Fahrzeugen oder bei der Montage von Bremsleitungen, Kabeln, Leuchten und dergleichen.

Es sind zwar sogenannte Durchsetzfügeverfahren und Stanznietverfahren bekannt, die im Regelfall nicht zu einer Perforierung des Blechteiles führen. Beim Durchsetzfügen werden in bekannter Weise zwei Blechteile aneinander befestigt und die zwei Blechteile so verformt, daß sie ineinander formschlüssig verhakt sind. Es wird hier aber kein Funktionselement und auch kein Hilfselement verwendet. Beim Stanznieten wird zwar ein Hilfselement in Form eines Stanznietes zur Verbindung von zwei Blechteilen verwendet. Der Stanzniet stellt jedoch kein Funktionselement dar und weist kein Schaffteil auf. Darüber hinaus sind zwar abgewandelte Versionen von Stanznieten bekannt, die mit einem Schaftteil verbunden sind und zum Einsetzen in nur ein Blechteil gedacht sind. Bei diesen Stanznieten ist eine Perforierung des Blechteiles durch den Stanzniet nicht unbedingt beabsichtigt, tritt jedoch statistisch betrachtet in einigen Fällen auf, so daß auch dieses bekannte Verfahren keine flüssigkeits- und/oder gasdichte Anbringung ermöglicht, die für die Massenfertigung geeignet ist.

Bei dem erfindungsgemäßen Verfahren bestehen mehrere Möglichkeiten, die formschlüssige Verbindung zwischen dem Blechteil und dem Kopf- bzw. Körperteil des Funktionselementes zu erreichen. Beispielsweise kann zur Erzeugung der funktionsmäßigen Verbindung das Kopf- oder Körperteil mit einem, an seiner dem Blechteil zugewandten Stirnseite offenen Hohlraum ausgebildet werden, der mindestens ein Hinterschneidungsmerkmal aufweist, wobei mittels der Umformmatrize das Blechmaterial mit diesem Hinterschneidungsmerkmal verhakt wird.

Die Ausbildung von solchen Hinterschneidungen in einem Hohlraum ist beispielsweise in EP-A-759510 im Zusammenhang mit Mutterelementen beschrieben. Bei dem in dieser Veröffentlichung beschriebenen Verfahren wird das Blechteil mit einem vorlaufenden Lochstempel bei der Anbringung des Mutterelementes gelocht, so daß von einer wasserdichten Verbindung nicht die Rede sein kann.

Eine andere Möglichkeit für die Ausbildung der formschlüssigen Verbindung zwischen dem Kopf- bzw. Körperteil des Funktionselementes und dem Blechteil, die in Ergänzung zu der oben erwähnten Möglichkeit verwendet werden kann, liegt darin, das Kopfteil an seinem Außenumfang mit mindestens einem Hinterschneidungsmerkmal zu versehen, mit dem das Blechmaterial verhakt wird. Bei dieser Ausführungsform ist es besonders vorteilhaft, wenn das Material des Kopf- bzw. Körperteiles des Funktionselementes mittels des Setzkopfes verformt wird, um die Verhakung zu erzeugen oder zu verbessern.

Das erfindungsgemäße Verfahren bzw. das entsprechende Funktionselement ist insbesondere zur Anwendung mit beschichteten Blechteilen geeignet, und zwar mit Blechteilen, die ein- oder beidseitig beschichtet sind, beispielsweise mit einer metallischen Beschichtung und/oder einer Kunststoffschicht und/oder einer Folien- oder Lackbeschichtung, wobei zu diesem Zweck das Umformverfahren durch Verwendung von gerundeten Formkanten sowohl im Element als auch an der Matrize durchgeführt wird. Bei der Verarbeitung von galvanisierten oder mit Zink überzogenen Blechteilen wird auf diese Weise die Beschichtung bei der Verformung des Blechteiles mit verformt und bleibt somit auch nach Anbringung des Funktionselementes an das Blechteil erhalten. Bei Kunststoff-, Folien- oder Lackbeschichtungen können diese auch mit modernen Techniken so gestaltet sein, daß sie durch das Anbringungsverfahren nicht verletzt sind oder aber nur in Bereichen verletzt werden, die in enge Berührung mit dem Kopfteil des Funktionselementes stehen und von außen nicht oder zumindest im wesentlichen nicht sichtbar oder zugänglich sind.

Zur Sicherstellung der erforderlichen Verdrehsicherung bestehen mehrere Möglichkeiten, beispielsweise können Verdrehsicherungsmerkmale im Hohlraum des Kopf- oder Körperteiles und/oder an der Ringwand und/oder an der dem Blechteil zugewandten Stirnseite des Kopf- bzw. Körperteiles und/oder am Außenumfang des Kopf- oder Körperteiles, ggf. nur im unteren Bereich desselben, vorgesehen werden. Es kann zu diesem Zweck der äußere Umfang des Kopf- oder Körperteiles eine ovale, polygonale oder genutete Form aufweisen.

Die Erfordernisse an die Verdrehsicherung sind bei den Funktionselementen, die hier angesprochen werden, weniger kritisch, da sie vielfach mit dem komplementären Befestigungselementen nicht durch Drehung, sondern durch eine axial gerichtete Bewegung oder durch eine Schnappverbindung befestigt werden.

Aus diesem Grunde kann kostensparend häufig auf Merkmale bei der Matrize verzichtet werden, die zu einer engen Verhakung mit den Verdrehsicherungsmerkmalen des Funktionselementes führen würden. Beispielsweise bei Verwendung von Verdrehsicherungsmerkmalen entsprechend der oben erwähnten Veröffentlichung EP-A-759 510. 4 können die entsprechenden Nasen an der Matrize weggelassen werden. Durch die mehreckige Form des in den Hohlraum des Elementes hineingeformten Blechmaterials wird beim vorliegenden Anmeldungsgegenstand eine ausreichende Verdrehsicherung erreicht ohne die Anwendung dieser Nasen. Dies hat auch den Vorteil, daß die beschichtete Oberfläche des Blechteiles durch die Nasen auch nicht verletzt wird.

Weitere, besondere Ausbildungsformen des Erfindungsgegenstandes sowie weitere Angaben zu der Aufgabenstellung lassen sich der nachfolgenden Figurenbeschreibung entnehmen.

In der beigefügten Zeichnung werden nachfolgende Ausführungsbeispiele der Erfindung näher erläutert. In der Zeichnung zeigen:
- Fig. 1: eine teilweise geschnittene Seitenansicht eines Funktionselementes,
- Fig. 2: eine Draufsicht auf die Stirnseite des Funktionselementes der Fig. 1 in Pfeilrichtung II gesehen,
- Fig. 3: eine Darstellung ähnlich Fig. 1, jedoch nur von der einen Hälfte einer etwas abgewandelten Ausführungsform,
- Fig. 4: eine Draufsicht entsprechend Fig. 2, jedoch in Pfeilrichtung IV der Fig. 3 gesehen,
- Fig. 5: eine Darstellung nur der rechten Hälfte eines weiteren Funktionselementes, das dem Funktionselement der Fig. 1 sehr ähnlich ist,
- Fig. 6: die Anbringung des Funktionselementes der Fig. 5 an ein Blechteil unter Anwendung eines Setzkopfes und einer Matrize, wobei die Darstellung teilweise geschnitten ist und nur auf der einen Seite der Längsachse des Funktionselementes gezeigt ist,
- Fig. 7: eine Darstellung ähnlich der Fig. 6, jedoch von einer abgewandelten Ausführungsform,
- Fig. 8: eine Darstellung entsprechend Fig. 1, jedoch von einer weiteren, abgewandelten Ausführungsform,
- Fig. 9: eine Draufsicht auf das Stirnende des Kopfteiles des Funktionselementes der Fig. 8 in Pfeilrichtung IX gesehen,
- Fig. 10: ein erster Arbeitsschritt bei der Anbringung des Funktionselementes der Fig. 8 an ein Blechteil unter Anwendung eines Setzkopfes und einer Matrize,
- Fig. 11: eine spätere Phase des Anbringungsverfahrens, das in Fig. 10 begonnen wird,
- Fig. 12: die Endphase des Anbringungsverfahrens nach Fig. 10 und Fig. 11,
- Fig. 13: eine vergrößerte Darstellung des mit XIII gekennzeichneten Bereiches der Fig. 12, wobei eine mögliche Abwandlung gezeigt ist, und
- Fig. 14, 15, 16 und 17: entsprechen den Figuren 6, 7, 12 und 13, jedoch bei Verwendung eines Funktionselementes in Form eines Hohlkörperelementes.

Bei allen Figuren werden für gleiche Teile oder Teile, die die gleiche Funktion aufweisen, die gleichen Bezugszeichen verwendet. Darüber hinaus soll bei den Figuren, in denen lediglich die rechte Hälfte der jeweiligen Ausführungsform gezeigt ist, davon ausgegegangen werden, daß die linke Hälfte zu der rechten Hälfte spiegelsymmetrisch ausgebildet und lediglich der Darstellung halber weggelassen wurde.

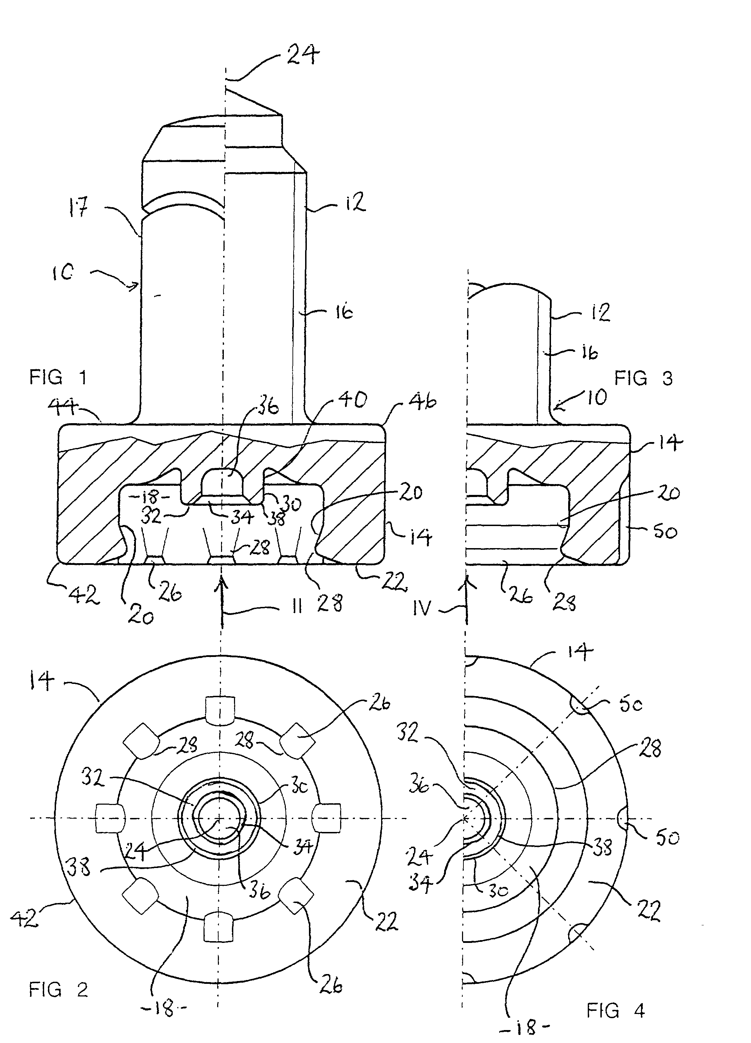

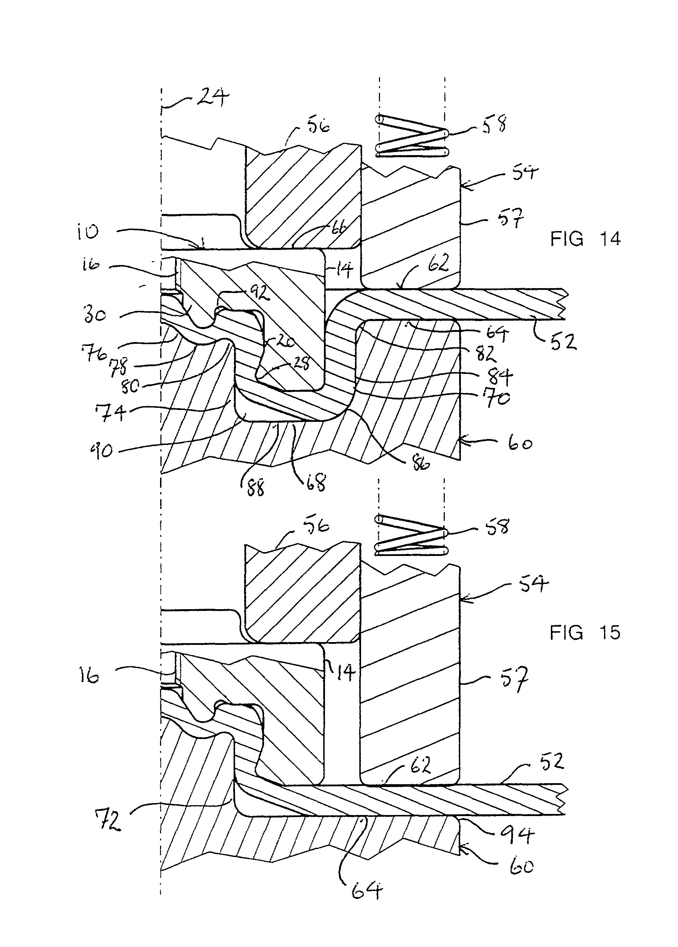

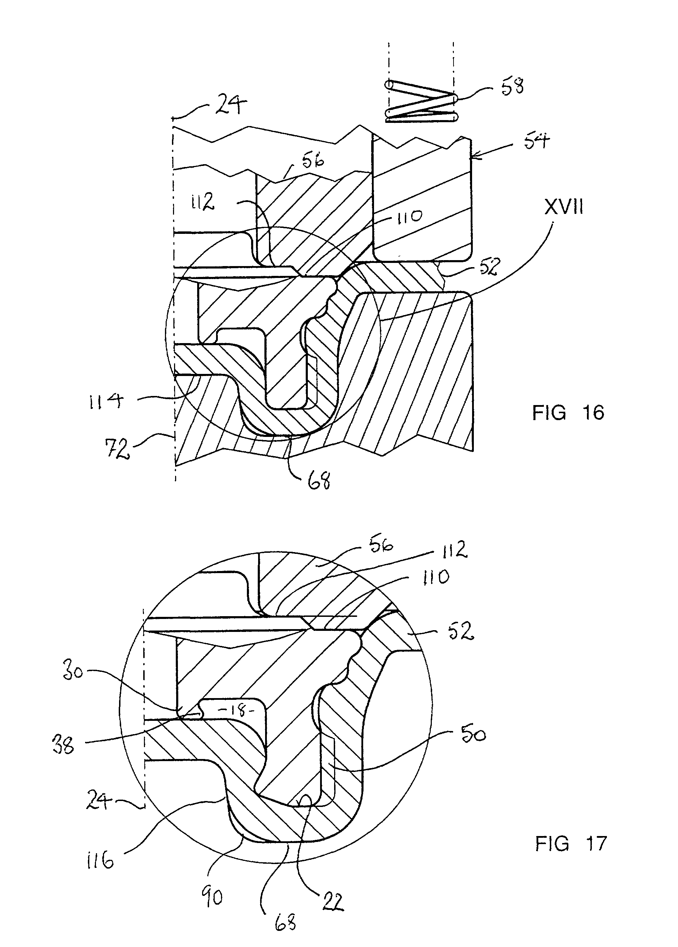

Die Figuren 1 und 2 zeigen zunächst ein Funktionselement 10 mit einem Schaftteil 12 und einem Kopfteil 14. Wie aus der Figur 1 ersichtlich ist, ist der Schaftteil 12 hier mit einem Gewinde 16 versehen. Dies ist jedoch nicht zwingend erforderlich. Wie auf der linken Seite der Figur 1 gezeigt, kann das Schaftteil 12 beispielsweise lediglich als zylindrischer Schaft 17 realisiert werden. Der Schaftteil kann nach Belieben ausgebildet werden mit einem Gewinde (16) oder mit einer gewindeänlichen Gestaltung oder mit einer Umfangsnut oder mit mehreren Umfangsnaten, beispielweise mit einer im Längsquerschnitt gesehenen Tannenbauform oder mit anderen Formgebungsmerkmalen Fig. 14, 15, 16 und 17 je nachdem, mit welchem Element das Funktionselement zusammenarbeiten soll.

Das Kopfteil 14 dieses Elementes ist hohl ausgebildet, d.h. weist einen Hohlraum 18 auf und ist in seinem unteren Bereich in Figur 1 entsprechend dem Mutterelement gemäß EP-A-759510 ausgebildet, d.h. daß Hinterschneidungsmerkmale 20 durch in die Stirnfläche 22 des Kopfteiles 14 in regelmäßigen Abständen um die mittlere Längsachse 24 angeordnete, keilförmige Vertiefungen (26) gebildet werden, die durch ein entsprechend gestaltetes Kaltschlagwerkzeug erzeugt werden.

Wie aus den Figuren 1 und 2 ersichtlich, haben diese keilförmigen Vertiefungen 26 ihre größte Tiefe bei der Einmündung in den Hohlraum 18 und gehen im mittleren Bereich der kreisförmigen Stirnfläche 22 in diese über. Das Funktionselement hat somit eine kreisförmige Auflagefläche im äußeren Bereich der Stirnseite 22. Das aus den keilförmigen Vertiefungen verdrängte Material bildet die Nasen 28, die die engste Stelle des Hohlraumes 18 definieren.

In Abweichung vom Mutterelement gemäß EP-A-759510 weist das Kopfteil des Funktionselementes der Figuren 1 und 2 in der Mitte der Bodenfläche des Hohlraumes 18 eine von dieser Bodenfläche vorspringende Ringwand 30 auf, die in Richtung der Stirnseite 22 des Kopfteiles geht, deren Länge jedoch so gewählt ist, daß sie zu Ende geht, bevor die durch die Nasen 28 gebildete engste Stelle des Hohlraumes 18 erreicht ist. Die Ringwand 30 hat eine eigene plane Stirnfläche 32. Diese plane Stirnfläche 32 geht über eine Fase 34 in eine gerundete Vertiefung 36 im Zentrum der Ringwand 30 über. Auf der radial äußeren Seite geht die plane Stirnseite 32 der Ringwand 30 über eine gerundete Kante 38 in die zylindrische Außenwand 40 der Ringwand über.

Wie ebenfalls aus Figur 1 zu sehen ist, weist das Kopfteil an der Stirnseite 22 eine gerundete Umfangskante 42 und ebenfalls an der dem Schaftteil 12 zugewandten Stirnseite 44 eine umlaufende gerundete Kante 46 auf.

Wie nachfolgend näher erläutert wird, ermöglichen die Hinterschneidungsmerkmale 20 eine formschlüssige Verbindung mit dem Blechteil, damit das Funktionselement 10 in axialer Richtung nur unter hoher Krafteinwirkung aus dem Blechteil herausgezogen werden kann. Die Vertiefungen 26 sowie die Bereiche 48 zwischen den Nasen 28 bilden Verdrehsicherungsmerkmale, in die das Blechmaterial eingebettet wird.

Die Figuren 3 und 4 zeigen eine alternative Ausbildung des Funktionselementes nach den Figuren 1 und 2, bei der in Abweichung von der Ausführung gemäß Figur 1 und 2 die Nasen 28 mit einer umlaufenden Ringnase 28 und die keilförmigen Vertiefungen 26 durch eine umlaufende, konische Vertiefung 26 ersetzt werden. Da die Ringnase 28 und die Ringvertiefung 26 nicht mehr imstande sind, als Verdrehsicherungsmerkmale zu dienen, werden im unteren Bereich des Außenumfanges des Kopfteiles 14 Längsnuten 50 vorgesehen, die hier die Verdrehsicherung gewährleisten, wie ebenfalls später näher erläutert wird.

Auch das Funktionselement der Figuren 3 und 4 wird als Kaltschlagteil ausgebildet, wobei das aus der konischen Vertiefung 26 vertriebene Material zur Bildung der Ringnase 28 verwendet wird.

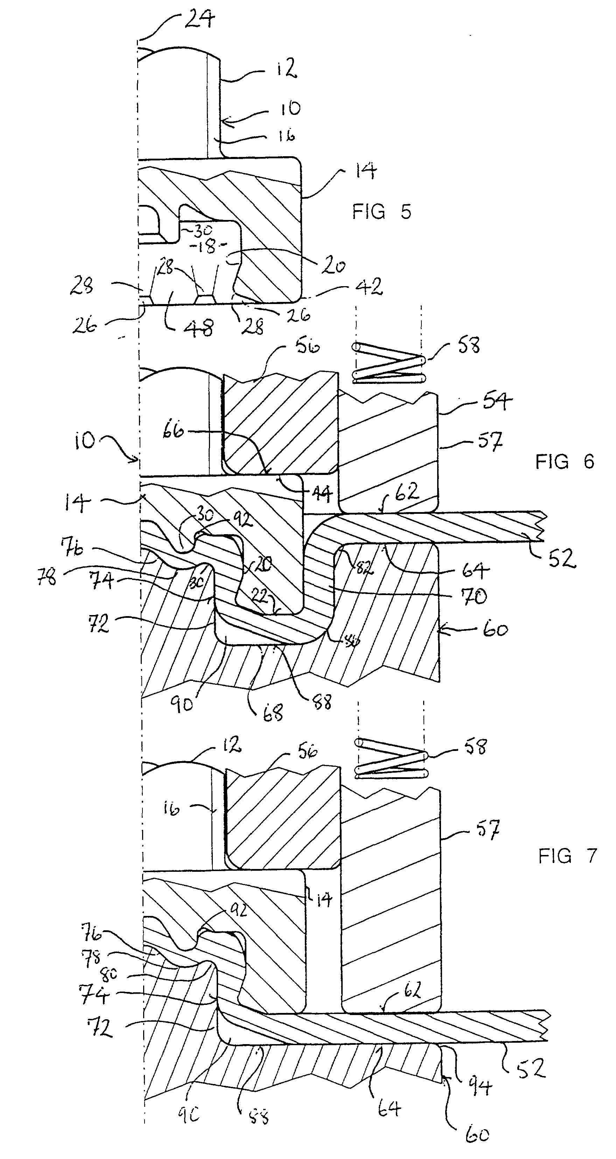

Die Figuren 5 und 6 zeigen nun die Anbringung des Funktionselementes 10 ähnlich der Figur 1 und 2 Ausführung an einem Blechteil 52.

Das Blechteil 52, das in Figur 6 bereits in mit dem Kopfteil 14 des Funktionselementes formschlüssig verbundener Form gezeigt ist, hat vor dem Einsetzen des Funktionselementes 10 die Form einer ebenen Blechtafel, wobei diese nicht zwingend erforderlich ist. Beispielsweise könnte das dargestellte Blechteil 52 einen Bereich einer vorher geformten Vertiefung im Blechteil darstellen. Aus Figur 6 geht hervor, daß das Funktionselement 10 von einem Setzkopf 54 geführt wird, der einen sich in Achsrichtung 24 beweglichen Stempel 56 und um diesen herum ein rohrförmiges Gehäuseteil 57 aufweist, das mit Federn 58 vorgespannt ist.

Das Funktionselement 10 wird, wie heutzutage bei der Blechverarbeitung üblich, mittels einer Presse mit dem Blechteil 52 verbunden, und zwar durch Zusammenwirken des Setzkopfes 54 mit einer Matrize 60. Dabei wird die Matrize 60 im unteren Werkzeug einer Presse aufgenommen, während der Setzkopf 54 am oberen Werkzeug der Presse oder an einer Zwischenplatte der Presse angebracht ist. Auch andere Anbringungsmöglichkeiten sind gegeben. Beispielsweise kann die Matrize 60 an der Zwischenplatte der Presse und der Setzkopf 54 am oberen Werkzeug der Presse angebracht werden, oder es sind umgekehrte Anordnungen denkbar, bei denen die Matrize 60 im oberen Werkzeug der Presse und der Setzkopf 54 im unteren Werkzeug der Presse oder an der Zwischenplatte angebracht werden. Auch muß es sich nicht unbedingt um eine Presse handeln. Es sind beispielsweise Anordnungen bekannt, bei denen die Matrize und der Setzkopf von einem Roboter getragen werden und die erforderliche Relativbewegung zwischen dem Setzkopf 54 und der Matrize 60 in Richtung der Achse 24 entweder durch den Roboter selbst oder durch Krafteinwirkung von außen erfolgen.

Die Anordnung ist so getroffen, daß am Anfang der Schließbewegung der Presse das federnd vorgespannte Gehäuseteil 57 zunächst das Blechteil 52 zwischen sein Stirnende 62 und dem Stirnende 64 der Matrize klemmt. Das Blechteil 52 kann jetzt nicht mehr im Werkzeug verrutscht werden. Bei der weiteren Schließbewegung der Presse berührt nunmehr der Stempel 56 mit seiner Stirnseite 66 die Stirnseite 44 des Funktionselementes 10 und drückt die andere, dem Schaftteil 12 entgegengesetzte Seite 22 des Kopfteiles 14 gegen das Blechteil 52, das durch die Schließkraft der Presse in die Ringvertiefung 68 der Matrize hineingedrückt wird, wobei bei gleichzeitiger Streckung des Blechteiles 52 in dieses eine topfartige Vertiefung 70 gebildet wird.

In ihrem mittleren Bereich weist die Matrize 60 einen zylinderartigen Vorsprung 72 mit einer zylindrischen Außenwand 74 und einem konusförmigen Stirnende 76 auf, die über eine gerundete Ringvertiefung 78 in eine gerundete Ringnase 80 übergeht. Bei der Schließung des Werkzeuges formt das Stirnende 76 der Matrize 60 das Blechmaterial in den Hohlraum 18 des Kopfteiles 14 hinein und schiebt das Material zum Teil in die durch die Nasen 28 gebildeten Hinterschneidungen 20. Während der Schließphase verdrängt das konusförmige, oben gerundete Stirnende 76 des zylindrischen Vorsprunges 72 der Matrize das Blech in der Richtung radial nach außen und verformt zugleich über das Blechmaterial die Ringwand 30 so, daß die radial nach außen erfolgende Spreizbewegung der Ringwand 30 ebenfalls Material in die Hinterschneidungen 20 schiebt.

Figur 6 zeigt den Zustand nach Abschluß des Setzverfahrens und, es ist ohne weiteres ersichtlich, daß eine formschlüssige Verbindung zwischen dem Blechteil und dem Funktionselement 10 im Bereich der Hinterschneidungen 20 erfolgt ist. Durch die Schließbewegung des Werkzeuges ist aber auch das Blechmaterial in die Vertiefungen 26 hineingezogen worden, so daß auch hier eine Verhakung stattfindet und die geforderte Verdrehsicherung auch erreicht ist. Das Blechmaterial wird aber auch - was aus dieser Zeichnung nicht hervorgeht - in die Bereiche 48 zwischen den Nasen 28 hineingedrückt, so daß auch hier eine Verdrehsicherung entsteht. Besonders wichtig ist, daß das Blechmaterial 52 an keiner Stelle vom Kopfteil des Funktionselementes 10 durchlocht ist. D.h. das Blechteil 52 bildet eine durchgehende Membran, die für die geforderte absolute Dichtheit sorgt.

Aus Figur 6 geht auch hervor, daß alle Formkanten der Matrize beispielsweise am Übergang 82 zwischen der planen Stirnseite 64 und der hier zylindrischen, inneren Umfangswand 84 der Vertiefung 68 der Matrize und am Übergang 86 zwischen der senkrechten Wand 84 der Vertiefung der Matrize und der waagrechten, planen Bodenfläche 88 der Vertiefung 68 sowie im Bereich der Ringnase 80 der Vertiefung 78 und der Spitze des konusförmigen Stirnendes des zylindrischen Vorsprunges 72 gerundet sind. Der Übergang zwischen der Bodenfläche 88 der Vertiefung 68 und der zylindrischen Seitenwand des zylindrischen Vorsprunges 72 muß zwar nicht unbedingt gerundet ausgebildet werden, wird aber üblicherweise gerundet ausgeführt aus Gründen der Festigkeit. Man merkt, daß im Bereich dieses Überganges nach Durchführung der Verbindung ein Freiraum 90 existiert. Ein weiterer Freiraum 92 ist benachbart zur verformten Ringwand zu sehen. Diese Freiräume sind erwünscht, weil sie mehr oder weniger ausgefüllt werden können, je nach Blechtoleranzen und Fließfähigkeit des Blechmaterials, ohne daß eine Beschädigung der Werkzeuge durch die vollständige Füllung dieser Räume zu befürchten wäre.

Auch die gerundeten Übergänge 42 am unteren Stirnende des Funktionselementes, im Bereich der Nasen 28 und beim Übergang von den Hinterschneidungen 20 in die Bodenfläche des Hohlraumes 18 sowie an den Kanten der Ringwand 30 sind als gerundet Formflächen gebildet. Man vermeidet auf diese Weise eine Verletzung des Blechteiles 52, die eventuell zu einer Perforierung desselben führen könnte.

Nach Fertigstellung der Verbindung gemäß Figur 6 weist das Blechteil 52 nicht nur eine topfartige Vertiefung 70 auf, in die das Kopfteil 14 des Funktionselementes 10 zum Teil aufgenommen ist, sondern in der Mitte des Bodenbereiches dieses Topfes eine umgekehrte topfartige Gestaltung, wo das Blechmaterial in den Hohlraum 18 des Kopfteiles hineingedrückt wurde.

Figur 7 zeigt, daß die topfartige Umschließung des Kopfteiles des Funktionselementes 10 durch das Blechteil 52 nicht erforderlich ist. Bei der Ausführung gemäß Figur 7 weist die Matrize keine Vertiefung 68 auf, sondern die Bodenfläche 88 der Matrize ist bis zur radial äußersten Kante 94 der Matrize hinausgeführt worden und bildet somit die Stirnseite der Matrize. Die Matrize 60 der Figur 7 weist jedoch im mittleren Bereich einen zylindrischen Vorsprung 72 auf, der die gleiche Form aufweist wie der zylindrische Vorsprung 72 der Ausführung gemäß Figur 6. Man merkt aus der Figur 7, daß das Blechteil 52, das ebenfalls vor der Anbringung des Funktionselementes 10 als ebenes Blechteil zu verstehen ist, zumindest im Bereich des Setzkopfes, im Bereich des Kopfteiles ebenfalls zwischen das Stirnende 62 des federnd vorgespannten Gehäuses 57 und der Stirnfläche 64 der Matrize geklemmt ist. Ansonsten gilt die Funktionsbeschreibung sowie die Beschreibung der Gestaltung der Geräte für die Ausführung gemäß Figur 7 genauso wie für die Ausführung gemäß Figur 6, weshalb die Beschreibung hier nicht wiederholt werden muß.

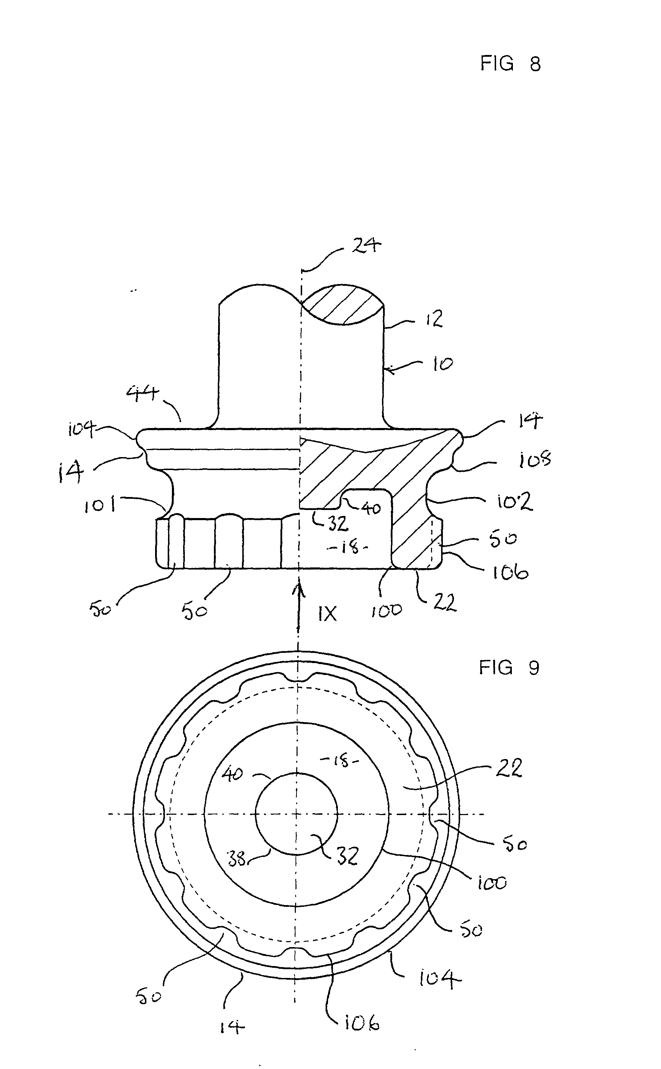

Figur 8 zeigt nunmehr eine abgewandelte Ausführungsform des Funktionselementes 10, bei dem der Hohlraum 18 als zumindest im wesentlichen zylindrischer Hohlraum ausgebildet ist und die Ringwand 30, die von der Bodenfläche des Hohlraumes 18 vorspringt, als ein massiver zylindrischer Vorsprung geformt ist, dessen zylindrische Außenfläche 40 über eine gerundete Kante 38 in eine ebene Stirnseite 32 übergeht.

Auch der Übergang vom zylindrischen Hohlraum 18 in die Stirnfläche 22 des Kopfteiles ist gerundet ausgeführt, wie beim Bezugszeichen 100 angedeutet.

Man merkt, daß bei der Ausführung gemäß Figuren 8 und 9 keine Hinterschneidungsmerkmale im Hohlraum 18 vorgesehen sind. Statt dessen wird bei dieser Ausführung eine Hinterschneidung in Form einer ringförmigen Vertiefung 102 im Außenumfang des Kopfteiles 14 gebildet. Diese ringförmige Vertiefung 102 befindet sich im Bereich des Außenumfanges zwischen der Ringnase 104 im Bereich des Überganges von der Stirnseite 44 in den äußeren Umfang 101 des Kopfteiles 14 und dem unteren Bereich 106 des Außenumfanges des Kopfteiles 14 benachbart zu dem dem Schaftteil 12 abgewandten Stirnende 22.

Dieser untere Bereich 106 des Außenumfanges des Kopfteiles 14 hat einen größeren Durchmesser als die tiefste Stelle der ringförmigen Vertiefung 102 und ist im übrigen mit Längsnuten 50 versehen, entsprechend der Ausführung gemäß Figuren 3 und 4, die der Verdrehsicherung dienen.

Der Figur 8 ist im übrigen zu entnehmen, daß es unterhalb der Ringnase 104 eine Ringwulst 108 gibt, die eine wesentliche Rolle bei der Setzbewegung spielt, wie später erläutert wird.

Auch bei dieser Ausführung kann die Gestaltung des Schaftteiles 12 nach Belieben gewählt werden.

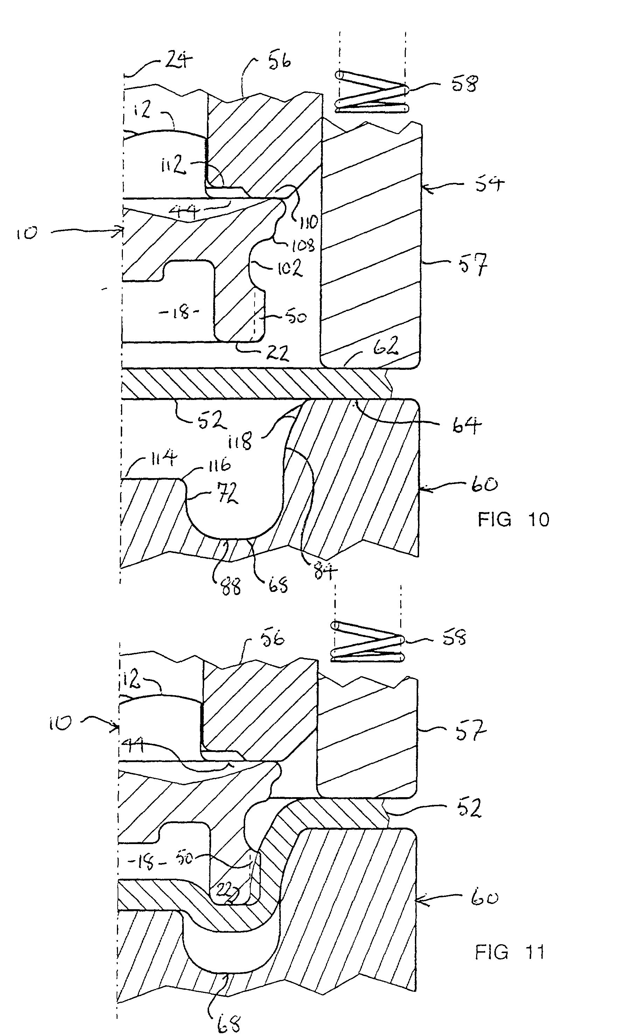

Das Einsetzen des Funktionselementes 10 der Ausführung gemäß Figur 8 und 9 wird nunmehr näher erläutert anhand der Figuren 10 bis 13. Auch bei dieser Ausführung erfolgt die Anbringung des Funktionselementes 10 mittels eines Setzkopfes 54, der entsprechend der Ausführung gemäß Figuren 6 und 7 ebenfalls über ein nach unten federvorgespanntes, rohrförmiges Gehäuseteil 57 und einem koaxial zu diesem bewegbaren Stempel 56 aufweist, der auf der dem Schaftteil 12 benachbarten Stirnseite 44 des Funktionselementes 10 drückt.

In Abweichung von der Darstellung gemäß Figur 6 wird die Stirnseite des zylindrischen Stempels 56 hier mit einem vorspringenden Außenrand 110 und einer ringförmigen Vertiefung 112, die radial innerhalb dieses Außenrandes liegt, ausgebildet, so daß zunächst lediglich die Stirnseite des vorspringenden Ringbereiches 110 mit der Stirnseite 144 des Kopfteiles 14 in Berührung gelangt.

Figur 10 zeigt, wie das Blechmaterial 52 in Form einer ebenen Blechtafel zwischen der Stirnseite 62 des Gehäuses 57 und der ebenen Stirnseite 64 der Matrize 60 am Anfang der Setzbewegung geklemmt wird.

Die Matrize 60 ist entsprechend der Matrize der Figur 6 mit einer ringförmigen Vertiefung 68 mit einer ebenen Bodenfläche 88 versehen und weist ebenfalls einen zylindrischen Vorsprung 72 auf, der aber hier lediglich oben eine plane, senkrecht zur Längsachse 24 angeordnete Stirnfläche 114 aufweist, wobei diese Stirnfläche über eine gerundete Formkante 116 in die zylindrische Wand des Vorsprunges 72 übergeht.

Ebenfalls in Abweichung von der Gestaltung gemäß Figur 6 ist bei diesem Beispiel die Außenwand 84 der Vertiefung 68 nicht senkrecht angeordnet, sondern divergiert in Richtung auf die Stirnfläche 64 der Matrize 60 zu. Der Übergang von der Umfangswand 84 der Vertiefung in die Stirnfläche 64 ist hier ebenfalls als gerundete Formkante 118 ausgebildet.

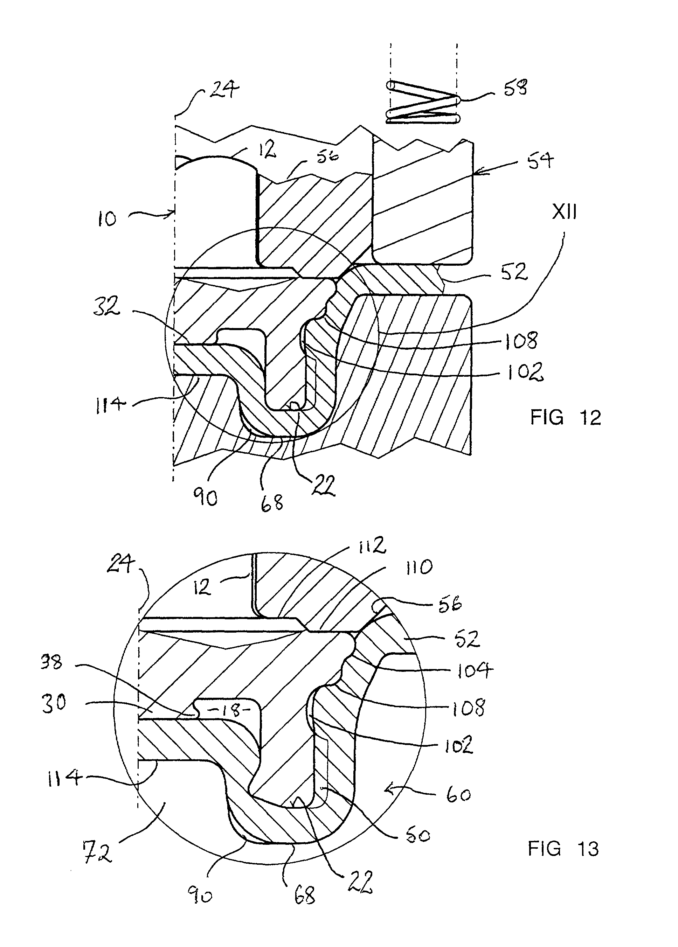

Figur 11 zeigt nunmehr ein Zwischenstadium der Verbindung des Funktionselementes 10 mit dem Blechteil 52. Man merkt, daß das ebene Stirnende 22 des Kopfteiles das Blechmaterial 52 in die Ringvertiefung 68 hineindrückt, wobei aufgrund der leicht konisch gestalteten Umfangswand 84 der Ringvertiefung 68 das Blechmaterial anfängt, sich in die Nuten 50 im unteren Bereich des Außenumfanges des Kopfteiles 14 hinein zu bewegen. Gleichzeitig erfolgt durch den zylindrischen Vorsprung 72 eine Verformung des Blechmaterials 52 in den Hohlraum 18 hinein. Der Endzustand ist dann in Figur 12 gezeigt.

Aus dieser Zeichnung geht zunächst hervor, daß das Blechmaterial 52 vollständig in die Vertiefung 68 der Matrize 60 hineingedrückt worden ist, wobei der zylindrische Vorsprung 72 das Blechmaterial zwischen sein Stirnende 114 und dem gegenüberliegenden Stirnende 32 des zylindrischen Vorsprunges im Hohlraum 18 des Kopfteiles 14 geklemmt hat.

Man merkt auch, daß bei der weiteren Schließbewegung des Werkzeuges sich die Ringwulst 108 in das Blechmaterial 52 hineingedrückt hat und in Zusammenarbeit mit der leicht konisch divergierenden Umfangswand 116 der Matrize 60 Blechmaterial in die ringförmige Hinterschneidung 102 hineingedrückt hat. Die Hinterschneidung 102 bzw. die entsprechende Ringvertiefung ist nicht vollständig ausgefüllt, um je nach eigentlicher Blechdicke Platz für die Aufnahme des Blechmaterials zu verschaffen.

Bei der Schließung des Werkzeuges ist aber bei diesem Ausführungsbeispiel zusätzlich zu der erwähnten Bewegung auch noch das Material des Kopfteiles des Funktionselementes verformt worden, und zwar so, daß der Ringkragen 110 des Stempels 56 eine entsprechende Vertiefung im Kopfteil 14 des Funktionselementes gebildet hat und die Stirnseite des Stempels 56 nunmehr vollständig auf die verformte Stirnseite 44 des Kopfteiles anliegt. Das durch diese Verformung weggedrückte Material hat sich einerseits in das Blechmaterial 52 hineingedrückt, andererseits aber auch zu der Bewegung des Blechmateriales in die Hinterschneidung 102 beigetragen. Diese besondere Ausbildung der Stirnseite des Stempels 56 ist zwar bei dieser Ausführungsform nicht zwingend erforderlich, jedoch sehr nützlich, um eine ausreichende Festigkeit der Verbindung zwischen dem Funktionselement 10 und dem Blechteil 52 zu erzeugen. Auch hier ist auf Anhieb ersichtlich, daß eine formschlüssige Verbindung im Bereich der Hinterschneidung 102 erreicht worden ist, wobei zu sagen ist, daß das Blechmaterial 52 auf den zwischen den Nuten 50 gebildeten Nasen des Kopfteiles 14 zum Anliegen kommt und ein Ausziehen des Funktionselementes 10 verhindert. Die Verdrehsicherung wird bei diesem Beispiel dadurch erzeugt, daß das Blechmaterial in die Nuten 50 hineingedrückt wird.

Figur 13 zeigt zum einen im Bereich der Hinterschneidung 102 eine etwas vergrößerte Darstellung der endgültigen Gestaltung, zeigt aber auch, daß der Hohlraum 18 zusätzlich mit einer Ringnase 28 versehen werden kann, so daß eine Hinterschneidung 20 auch bei diesem Beispiel entsteht und eine Verhakung des Blechmateriales mit dieser Hinterschneidung 20 hier in Form einer ringförmigen Hinterschneidung erfolgen kann.

Aus der Darstellung der Figur 13 sieht man auch, daß der zylindrische Vorsprung 30 ebenfalls durch die Setzbewegung verformt ist und daß sich die Formkante 38 aufgrund dieser Verformung radial nach außen bewegt hat und hierdurch auch das Blechmaterial in die Hinterschneidung 20 geschoben hat.

Die Ausbildung hier im Bereich des Hohlraumes 18 entspricht zumindest im wesentlichen der Ausbildung der Ausführungsform gemäß Figuren 3 und 4. Auch hier sieht man, daß das Blechmaterial die Form einer durchgehenden Membran hat, so daß eine absolut dichte Verbindung erzeugt wurde. Auch hier sind alle Formkanten gerundet ausgeführt, um eine Verletzung des Blechmaterials im Sinne einer Perforierung desselben oder eine unerwünschte Beschädigung einer etwaigen Beschichtung so weit wie möglich zu vermeiden.

Auch bei dieser Ausführungsform sind Freiräume im Bereich des Kopfteiles erzeugt worden, die zusätzlichen Aufnahmeplatz je nach Blechdicke und Blechmaterial verschaffen.

Es ist nämlich ein Vorteil von allen hier angegebenen Beispielen, daß man mit ein und demselben Funktionselement mit mehreren verschiedenen Blechdicken arbeiten kann. Es muß lediglich die Matrize an die Blechdicke angepaßt werden.

Die Form der Matrize für das Einsetzen der Ausführungsform gemäß Figur 3 und 4 ist zwar nicht extra gezeigt, sie hat jedoch zumindest im wesentlichen die gleiche Form wie bei der Matrize für die Ausführungsform gemäß Figur 6, jedoch mit der Ausnahme, daß die äußere Ringwand 84 der Vertiefung 68 leicht divergierend ausgebildet ist, um eine hochwertige, formschlüssige Verbindung mit den Nuten 50 sicherzustellen, ohne das Blech zu verletzen. Diese konische Form ist aber auch nicht zwingend erforderlich bei der Anbringung eines Funktionselementes entsprechend der Figuren 3 und 4. Die leichte Konusform der Matrize hat aber den zusätzlichen Vorteil, daß sich bei der Öffnung des Werkzeuges das Blechteil leicht von der Matrize löst.

Schließlich zeigen die Figuren 14, 15, 16 und 17, daß sich die Erfindung ohne weiteres auch mit Funktionselementen in Form von Hohlkörperelementen realisieren läßt. In den Figuren 14 bis 17 sind die gleichen Bezugszeichen verwendet, wie in den entsprechenden Figuren 6, 7, 12 und 13. Es wird auf eine separate Beschreibung dieser Figuren 14 bis 17 verzichtet. Bei diesen Figuren tritt das Hohlkörperteil 14 an die Stelle des Kopfteils. Es muß lediglich sichergestellt werden, daß das Hohlkörperelement nicht in unerwünschter Weise bei der Anbringung verformt wird, wobei eine Verformung unter Umständen beabsichtigt sein könnte, beispielsweise, um eine Verengung am Eingang des Hohlkörperelementes zu erzeugen. Eine solche Verengung könnte beispielsweise zur Realisierung einer Schnappverbindung mit einem entsprechend gestalteten männlichen Teil nützlich sein.

Als Beispiel für die Blechwerkstoffe, die in Frage kommen, wäre ST12 bis ST15, DIN 16 und ZStE Qualitäten 220 bis 430 zu nennen. Für die Funktionselemente kämen u.a. Werkstoffe gemäß DIN 1654 (Kaltschlagstähle), wie sie für Funktionselemente üblich sind, in Frage.

Alle Beispiele haben den zusätzlichen Vorteil, daß ein weitgehender Schutz gegen das Verkanten und Aushebeln des Funktionselementes gegeben ist. Dies trifft insbesondere für die Ausführungsformen nach den Figuren 6, 12 und 13 zu, wo das Kopfteil 14 zwischen den zwei topfartigen Bereichen des Blechteiles eingeklemmt ist.

## Patentansprüche

1. Verfahren zur dichten, insbesondere flüssigkeitsund/oder gasdichten Anbringung eines Funktionselementes (10), insbesondere eines aus einem Schaftteil (12)und einem Kopf- oder Körperteil (14) bestehenden Funktionselementes, an ein Blechteil (52), bei dem das Element (10) das Blechmaterial (52) nicht durchdringt, jedoch an diesem Blechteil zur Übertragung von Axialkräften und vorzugsweise auch von Drehmomenten befestigt ist, wobei durch Krafteinwirkung zwischen einem auf der einen Seite des Blechteils (52) angeordneten, das Funktionselement (10) führenden Setzkopf (54) und einer auf der anderen Seite des Blechteils angeordneten Umformmatrize (60) das Blechteil (52), ohne dieses zu perforieren, formschlüssig mit dem Kopfteil (14) oder im Falle der Verwendung eines Hohlkörperelementes mit dessen Körperteil (14) verbunden wird, das Element (10) durch umformtechnisches Fügen mit dem Blechteil (52) verbunden wird, und das Kopf- oder Körperteil (14) mit gerundeten Umformkanten (38, 42, 100) und die Umformmatrize (60) in den mit dem Blechteil in Berührung gelangenden Bereichen ausschließlich mit gerundeten Umformkanten ausgebildet ist, **dadurch gekennzeichnet, daß** zur Erzeugung der formschlüssigen Verbindung das Kopfteil bzw. das Körperteil (14) mit einem an seiner dem Blechteil (52) zugewandten Stirnseite (22) offenen Hohlraum (18) ausgebildet wird, der mindestens ein Hinterschneidungsmerkmal (20) aufweist, und daß mittels der Umformmatrize (60) das Blechmaterial mit diesem Hinterschneidungsmerkmal (20) verhakt wird.

2. Verfahren nach Anspruch 1, **dadurch gekennzeichnet, daß** innerhalb des Hohlraums (18) im Bereich dessen Bodenfläche eine vorstehende Ringwand (30) vorgesehen ist, welche durch die Umformmatrize (60) über das Blechmaterial radial nach außen aufgeweitet ist und Blechmaterial gegen die Innenwand des Hohlraumes (18) oberhalb des Hinterschneidungsmerkmals (20) drückt.

3. Verfahren nach Anspruch 1, **dadurch gekennzeichnet, daß** zur Erzeugung der formschlüssigen Verbindung des Kopfteils oder des Körperteiles (14) mit dem Blechteil (52) das Kopfteil bzw. das Körperteil an seinem Außenumfang mindestens ein Hinterschneidungsmerkmal (102) aufweist, mit dem das Blechmaterial verhakt wird, und wahlweise, daß das Material des Kopf- oder Körperteils (14) des Funktionselementes mittels des Setzkopfes (54) verformt wird, um die Verhakung zu erzeugen.

4. Verfahren nach einem der vorhergehenden Ansprüche, **dadurch gekennzeichnet, daß** das Blechteil (52) einoder beidseitig beschichtet ist, beispielsweise mit einer metallischen Beschichtung und/oder einer Kunststoff- und/oder einer Folien- oder Lackbeschichtung, und das Umformverfahren durch Verwendung von gerundeten Formkanten (38, 42, 100; 78, 80, 82, 86) sowohl im Element (10) als auch an der Matrize (60) durchgeführt wird.

5. Verfahren nach einem der vorhergehenden Ansprüche, **dadurch gekennzeichnet, daß** Verdrehsicherungsmerkmale (20, 26, 48, 50) im Hohlraum (18) des Kopf- oder Körperteils (14) und/oder an der Ringwand und/oder an der dem Blechteil zugewandten Stirnseite (22) des Kopfoder Körperteils (14) und/oder am Außenumfang des Kopf- oder Körperteils (14), gegebenenfalls nur im unteren Bereich desselben vorgesehen sind, und daß das Blechmaterial formschlüssig in die Verdrehsicherungsmerkmale (20, 26, 48, 50) eingebettet wird.

6. Funktionselement (10) mit einem Schafteil (12) und einem Kopfteil (14) oder mit einem hohlen Körperteil (14) zur insbesonders flüssigkeits- und/oder gasdichten Anbringung an ein Blechteil (52), ohne das Blechteil zu durchdringen bzw. zu perforieren, wobei das Kopf- oder Körperteil (14) in einem an seiner dem Blechteil zugewandten Stirnseite (22) offenen Hohlraum (18) mindestens ein Hinterschneidungsmerkmal (20) aufweist und der stirnseitig offene Hohlraum (18) durch eine durchgehende Umfangswandung begrenzt ist, **dadurch gekennzeichnet, dass** die Umfangswandung mehrere Hinterschneidungsmerkmale (20) enthält, welche durch von der Umfangswandung des Hohlraums (18) in diesen hineinragenden Nasen (28) gebildet sind, dass die Hinterschneidungsmerkmale (20) durch an entsprechenden Stellen an der Stirnfläche des Kopf- oder Körperteils eingedrückte Vertiefungen (26) ausgebildet sind, die zugleich als Verdrehsicherungsmerkmale dienen und dass der Übergang (38) der planen Stirnfläche (32) einer im offenen Hohlraum (18) vorgesehenen Ringwand (30) bzw. eines dort vorgesehenen zylindrischen Vorsprungs in die zylindrische Außenwand (40) der Ringwand (30), sowie der Übergang (42) von der Stirnseite (22) in die Umfangsfläche des Kopfteils (14) und der Übergang (100) vom zylindrischen Hohlraum (18) in die Stirnseite (22) durch gerundeten Umformkanten (38,42, 100)gebildet sind.

7. Funktionselement nach Anspruch 6,
**dadurch gekennzeichnet, daß** ein weiteres Hinterschneidungsmerkmal (102) durch eine nach außen vorspringende Ringnase (104) an dem der freien Stirnseite (44) benachbarten Bereich des äußeren Umfangs des Kopf- bzw. Körperteils (14) und eine zwischen dieser Ringnase (104) und der anderen Stirnseite (22) des Kopf- bzw. Körperteils (14) im Bereich der Umfangswandung desselben vorgesehene Vertiefung, insbesondere Ringvertiefung (102), gebildet ist.

8. Funktionselement nach Anspruch 7, **dadurch gekennzeichnet, dass** zwischen der Ringnase (104) und der Vertiefung (102) ein umlaufender, gerundeter Ringwulst (108) vorgesehen ist.

9. Funktionselement nach Anspruch 8, **gekennzeichnet durch** mehrere sich jeweils zwischen der Ringnase (104) und der anderen Stirnseite (22) des Kopf- bzw. Körperteils (14) in dessen Außenumfang befindlichen und je ein weiteres Hinterschneidungsmerkmal (102) bildende Vertiefungen.

10. Funktionselement nach einem der Ansprüche 6 bis 9,
**dadurch gekennzeichnet, daß** innerhalb des Hohlraumes (18) eine an dessen Bodenfläche angeordnete in Richtung der dem Blechteil (52) zugewandten Stirnseite (22) vorspringende Ringwand (30) vorgesehen ist, welche in Richtung dieser Stirnseite gehend vor der durch die Hinterschneidungsmerkmale (20) gebildeten engsten Stelle des Hohlraums in eine eigene Stirnseite (32) endet.

11. Funktionselement nach Anspruch 10, **dadurch gekennzeichnet, dass** die Stirnseite (32) der Ringwand (30) auf der inneren Seite durch eine Fase (34) bzw. eine gerundete Kante gebildet ist.

12. Funktionselement nach Anspruch 10, **dadurch gekennzeichnet, daß** die Stirnseite der Ringwand (30) eine kreisförmige sich zumindest im wesentlichen senkrecht zur Längsachse (24) des Elementes (10) erstreckende plane Fläche (32) aufweist.

13. Funktionselement nach Anspruch 12, **dadurch gekennzeichnet, dass** die plane Fläche (32) an der Stirnseite der Ringwand (30) vorzugsweise über eine gerundete Kante (38) in deren zylindrische oder konische Außenwand (40) übergeht.

14. Funktionselement nach einem der Ansprüche 6 bis 13,
**dadurch gekennzeichnet, daß** Verdrehsicherungsmerkmale (48, 50) an der Stirnseite (32) der Ringwand (30) und/oder an dem äußeren Umfang des Kopf- bzw. Körperteils (14), beispielsweise im Bereich der dem Blechteil (52) zugewandten Stirnseite (22) des äußeren Umfangs des Kopf- bzw. Körperteils angeordnet sind und/oder durch eine polygonale oder genutete Form des Kopf- bzw. Körperteils gebildet sind.

15. Funktionselement (10) mit einem Schafteil (12) und einem Kopfteil (14) oder mit einem hohlen Körperteil (14) zur insbesonders flüssigkeits- und/oder gasdichten Anbringung an ein Blechteil (52), ohne das Blechteil zu durchdringen bzw. zu perforieren, wobei das Kopf- oder Körperteil (14) in einem an seiner dem Blechteil zugewandten Stirnseite (22) offenen Hohlraum (18) ggf. eine eine Hinterschneidung (20) bildende Ringnase (28) aufweist und der stirnseitig offene Hohlraum (18) durch eine durchgehende Umfangswandung begrenzt ist, **dadurch gekennzeichnet, dass** der Übergang (38) der planen Stirnfläche (32) einer im offenen Hohlraum (18) vorgesehenen Ringwand (30) bzw. eines dort vorgesehenen zylindrischen Vorsprungs in die zylindrische Außenwand (40) der Ringwand (30), sowie der Übergang (42) von der Stirnseite (22) in die Umfangsfläche des Kopfteils (14) und der Übergang (100) vom zylindrischen Hohlraum (18) in die Stirnseite (22) durch gerundeten Umformkanten (38,42, 100)gebildet sind und daß ein weiteres Hinterschneidungsmerkmal (102) durch eine nach außen vorspringende Ringnase (104) an dem der freien Stirnseite (44) benachbarten Bereich des äußeren Umfangs des Kopf- bzw. Körperteils (14) und eine zwischen dieser Ringnase (104) und der anderen Stirnseite (22) des Kopf- bzw. Körperteils (14) im Bereich der Umfangswandung desselben vorgesehene Vertiefung, insbesondere Ringvertiefung (102), gebildet ist.

16. Funktionselement nach Anspruch 15, **dadurch gekennzeichnet, dass** zwischen der Ringnase (104) und der Vertiefung (102) ein umlaufender, gerundeter Ringwulst (108) vorgesehen ist.

17. Funktionselement nach Anspruch 16, **gekennzeichnet durch** mehrere sich jeweils zwischen der Ringnase (104) und der anderen Stirnseite (22) des Kopf- bzw. Körperteils (14) in dessen Außenumfang befindlichen und je ein weiteres Hinterschneidungsmerkmal (102) bildende Vertiefungen.

18. Funktionselement nach einem der vorhergehenden Ansprüche 6 bis 17, **dadurch gekennzeichnet, dass** das Schaftteil (12) mit einem Gewinde (16) oder mit einer gewindeähnlichen Gestaltung oder mit einer Umfangsnut oder mit mehreren Umfangsnuten, beispielsweise mit einer im Längsquerschnitt gesehenen Tannenbaumform oder mit anderen Formgebungsmerkmalen ausgestattet ist, und daß die gewählte Gestaltung des Schaftteils (12) mit einem entsprechenden, mit dem Funktionselement zusammenarbeitenden Element verbindbar ist.

19. Funktionselement nach einem der Ansprüche 6 bis 17, **dadurch gekennzeichnet, dass** es als Hohlkörperelement realisiert ist.

20. Zusammenbauteil, insbesondere nach dem Verfahren nach einem der Ansprüche 1 bis 5 hergestellt, bestehend aus einem Blechteil (52) und einem Funktionselement (10) nach einem der vorhergehenden Ansprüche 6 bis 19, **dadurch gekennzeichnet, daß** das Blechmaterial (52) mit dem Hinterschneidungsmerkmal (20, 102) bzw. mit den Hinterschneidungsmerkmalen (20, 102) formschlüssig verbunden bzw. verhakt ist.

21. Zusammenbauteil nach Anspruch 20, **dadurch gekennzeichnet, daß** das Blechmaterial (52) zur Übertragung von um die Längsachse des Funktionselementes wirkenden Drehmomenten mit den Verdrehsicherungsmerkmalen (26, 28, 48, 50) formschlüssig verbunden bzw. verhakt ist und daß das Blechteil (52) an keiner Stelle im Bereich der Fügeverbindung mit dem Kopf- bzw. Körperteil (14) des Funktionselementes (10) perforiert oder gelocht ist, daß das Blechteil (52) topfartig innerhalb des Hohlraumes (18) aufgenommen ist und im Bodenbereich des Topfes formschlüssig hinter dem Hinterschneidungsmerkmal (20) bzw. den Hinterschneidungsmerkmalen (20) verhakt ist, und/oder daß das Kopf- bzw. Körperteil (14) zumindest zum Teil innerhalb einer topfartigen Vertiefung (70) des Blechteils (52) angeordnet ist.

22. Zusammenbauteil nach Anspruch 20 oder 21, **dadurch gekennzeichnet, dass** das Blechteil (52) wahlweise einoder beidseitig beschichtet ist, mit einem Metallüberzug und/oder mit einer Kunststoff- und/oder Folienund/oder Lackbeschichtung, und die Beschichtung durch das Fügeverfahren nicht oder höchstens an zwischen dem Funktionselement (10) und dem Blechteil (52) geklemmten Stellen beschädigt ist.

23. Matrize (60), insbesondere zur Anwendung bei einem Verfahren nach einem der Ansprüche 1 bis 5 zur Anbringung eines Funktionselementes (10) nach einem der Ansprüche 6 bis 19 und zur Bildung eines Zusammenbauteils nach einem der Ansprüche 20 bis 22, wobei die Matrize an der dem Blechteil (52) zugewandten Stirnseite eine Vertiefung (68) mit einer parallel zur Längsachse (24) der Matrize verlaufenden oder leicht in Richtung der dem Blechteil zugewandten Stirnseite (64) der Matrize divergierende Umfangswand (84) aufweist, die Umfangswand (84) der Vertiefung (68) im Querschnitt kreisrund, oval, polygonal oder mit Längsnasen versehen sein kann und über eine gerundete Kante (82) in die plane Stirnfläche (64) der Matrize übergeht, **dadurch gekennzeichnet, daß** die Matrize innerhalb ihrer Vertiefung (68) einen in Richtung der dem Blechteil (52) zugewandten Stirnseite (64) der Matrize (60) vorstehenden, eine zumindest im wesentlichen plane Stirnseite aufweisenden, zylindrischen Vorsprung (72) hat, der über eine gerundete Formkante (116) in dessen zylindrischer Seitenwand übergeht, wobei die Stirnseite (114) des Vorsprunges (72) niedriger ist als die die Vertiefung (68) umgebende Stirnseite (64) der Matrize (60), oder daß die Matrize innerhalb ihrer Vertiefung (68) einen in Richtung der dem Blechteil (52) zugewandten Stirnseite (64) der Matrize (60) vorstehenden zylinderförmigen Vorsprung (72) aufweist, dessen Stirnende (76) zumindest im wesentlichen konusförmig gestaltet ist und die Spitze des konusförmigen Stirnendes gerundet ist.

24. Matrize (60), insbesondere zur Anwendung bei einem Verfahren nach einem der Ansprüche 1 oder 2 zur Anbringung eines Funktionselements nach Anspruch 6 und zur Bildung eines Zusammenbauteils nach einem der Ansprüche 20 bis 22, **dadurch gekennzeichnet, daß** sie einen von einer ringförmigen, planen Stirnfläche (64) umgebenen, in Richtung des Blechteiles (52) vorstehenden, zylindrischen Vorsprung (72) aufweist, dessen Stirnende (76) zumindest im wesentlichen konusförmig gestaltet ist und die in den mit dem Blechteil in Berührung gelangenden Bereichen ausschließlich mit gerundeten Umformkanten ausgebildet ist.

25. Matrize nach einem der Ansprüche 23 oder 24, **dadurch gekennzeichnet, daß** das konusförmige Stirnende des zylindrischen Vorsprunges (72) über eine gerundete Ringvertiefung (78) und eine um diese herum angeordnete, gerundete Ringnase (80) in die zylindrische Seitenwand des Vorsprunges (72) übergeht.

## Claims

1. A method for the sealed attachment, in particular liquid tight and/or gas tight attachment of a functional element (10), in particular of a functional element consisting of a shaft part (12) and a head or body part (14), to a sheet metal part (52) in which the element (10) does not penetrate the sheet metal material (52) but is secured to the sheet metal part for the transmission of axial forces and preferably also of torques, wherein, through the action of force between a setting head (52) arranged on one side of the sheet metal part (52) and guiding the functional element (10) and a die button (60) arranged on the other side of the sheet metal part, the sheet metal part (52) is connected, without being perforated, in form-fitted manner to the head part (14), or, in the case of using a hollow body element, to its body part (14), the element (10) being connected to the sheet metal part by a technical shaping and joining process, the head or body part (14) being formed with rounded shaping edges (38, 42, 100) and the die button (60) being formed in the regions which enter into contact with the sheet metal part exclusively with rounded shaping edges, **characterized in that** for the generation of the form-fitted connection the head part or the body part (14) is formed with an open hollow space (18) at its end face (22) facing the sheet metal part (52), the hollow space (18) having at least one undercut feature (20) and **in that** the sheet metal material is hooked with this undercut feature (20) by means of the die button (60).

2. Method in accordance with claim 1, **characterized in that** a projecting ring wall (30) is provided within the hollow space (18) in the region of its base surface and is dilated by the die button (60) via the sheet metal material radially outwardly and presses sheet metal material against the inner wall of the hollow space (18) above the undercut feature (20).

3. Method in accordance with claim 1, **characterized in that** for the generation of the form-fitted connection of the head part or of the body part (14) to the sheet metal part (52) the head part or the body part has at its outer periphery at least one undercut feature (102) with which the sheet metal material is hooked and optionally, that the material of the head or body part (14) of the functional element is deformed by means of the setting head (54) in order to produce the hooked engagement.

4. Method in accordance with any one of the preceding claims, **characterized in that** the sheet metal part (52) is coated on one side or on both sides, for example with a metallic coating and/or a plastic coating and/or a foil coating or paint coating and the shaping method is carried out both using rounded shaped edges (38, 42, 100; 78, 80, 82, 86) both in the element (10) and also at the die button (60).

5. Method in accordance with any one of the preceding claims, **characterized in that** features providing security against rotation (20, 26, 48, 50) are provided in the hollow space (18) of the head part or body part (14) and/or at the ring wall and/or at the end face (22) of the head part or body part (14) facing the sheet metal part and/or at the outer periphery of the head or body part (14), optionally only in the lower region of the same and **in that** the sheet metal material is bedded in form-fitted manner into the features providing security against rotation (20, 26, 48, 50).

6. Functional element (10) having a shaft part (12) and a head part (14) or with a hollow body part(14) for the in particular liquid and/or gas tight attachment to the sheet metal part (52) without penetrating or perforating the sheet metal part, wherein the head or body part (14) has at least one undercut feature (20) in an open hollow space (18) at its end facing the sheet metal part and the hollow space (18) which is open at the end face is bounded by a continuous peripheral wall, **characterized in that** the peripheral wall contains a plurality of undercut features (20) which are formed by noses (28) projecting from the peripheral wall of the hollow space (18) into the latter; **in that** the undercut features (20) are formed by recesses (26) pressed in at corresponding points at the end face of the head or body part which simultaneously serve as features providing security against rotation and **in that** the transition (38) of the planar end face (32) of a ring wall (30) provided in the open hollow space (18), or of a cylindrical projection provided there, into the cylindrical outer wall (40) of the ring wall (30) and also the transition (42) from the end face (22) into the peripheral surface of the head part (14) and the transition (100) from the cylindrical hollow space (18) into the end face (22) are formed by rounded shaping edges (38, 42, 100).

7. Functional elements in accordance with claim 6, **characterized in that** a further undercut feature (102) is formed by an outwardly projecting ring nose (104) at the region of the outer periphery of the head or body part (14) adjacent to the free end face (44) and a recess, in particular a ring recess (102), formed between this ring nose (104) and the other end face (22) of the head or body part (14) in the region of the peripheral wall of the same.

8. Functional element in accordance with claim 7, **characterized in that** a peripherally extending rounded ring bead (108) is provided between the ring nose (104) and the recess (102).

9. Functional element in accordance with claim 8, **characterized by** a plurality of recesses which are respectively located between the ring nose (104) and the other end face (22) of the head or body part (14) in its outer periphery and which each form a further undercut feature (102).

10. Functional element in accordance with any one of the claims 6 to 9, **characterized in that** a ring wall (30) is provided within the hollow space (18), is arranged at its base surface and projects in the direction of the end face (22) facing the sheet metal part (52), the ring wall terminating, when going in the direction of this end face, in its own end face (32) before the narrowest point of the hollow space formed by the undercut features (20).

11. Functional element in accordance with claim 10, **characterized in that** end face (32) of the ring wall (30) is formed at the inner side by a chamfer (34) or by a rounded edge.

12. Functional element in accordance with claim 10, **characterized in that** the end face of the ring wall (30) has a circular planar surface (32) extending at least substantially perpendicular to the longitudinal axis (24) of the element (10).

13. Functional element in accordance with claim 12, **characterized in that** the planar surface (32) at the end face of the ring wall (30) preferably merges via a rounded edge (38) into its cylindrical or conical outer wall (40).

14. Functional element in accordance with any one of the claims 6 to 13,
**characterized in that** features (48, 50) providing security against rotation are arranged at the end face (32) of the ring wall (30) and/or at the outer periphery of the head or body part (14), for example in the region of the end face (22) of the outer periphery of the head or body part facing the sheet metal part and/or are formed by a polygonal or grooved form of the head or body part.

15. Functional element (10) having a shaft part (12) and a head part (14) or a hollow body part (14), in particular for the liquid and/or gas tight attachment of the sheet metal part (52) without penetrating or perforating the sheet metal part, wherein the head or body part (14) optionally has ,in an open hollow space at its end (22) facing the sheet metal part, a ring nose (28) forming an undercut (20) and the hollow space (18) open at the end face is bounded by a continuous peripheral wall, **characterized in that** the transition (38) of the planar end face (32) of a ring wall (30) provided in the open hollow space (18) or of a cylindrical projection provided there into the cylindrical outer wall (40) of the ring wall (30) and also the transition (42) from the end face (22) into the peripheral surface of the head part (14) and the transition (100) from the cylindrical hollow space (18) into the end face (22) are formed by rounded shaping edges (48, 42, 100) and **in that** a further undercut feature (102) is formed by an outwardly projecting ring nose (104) at the region of the outer periphery of the head or body part (14) adjacent to the free end face (44) and a recess, in particular a ring recess (102), between this ring nose (104) and the other end face (22) of the head or body part (14) in the region of the peripheral wall of the latter..

16. Functional element in accordance with claim 15, **characterized in that** a peripherally extending, rounded ring bead (108) is provided between the ring nose (104) and the recess (102).

17. Functional element in accordance with claim 16, **characterized by** a plurality of recesses respectively located between the ring nose (104) and the other end face (22) of the head or body part (14) in its outer periphery and each forming a further undercut feature (102).

18. Functional element in accordance with any one of the preceding claims 6 to 17, **characterized in that** the shaft part (12) is provided with a thread (16) or with a thread-like formation or with a peripheral groove or with a plurality of peripheral grooves, for example with fir tree shape as seen in longitudinal cross-section or is equipped with outer form-giving features and **in that** the selected design of the shaft part (12) can be connected to a corresponding element which cooperates with the functional element.

19. Functional element in accordance with any one of the claims 6 to 17, **characterized in that** it is realized as a hollow body element.

20. Component assembly, in particular manufactured in accordance with the method of one of the claims 1 to 5, consisting of a sheet metal part (52) and the functional element (10) in accordance with any one of the preceding claims 6 to 19, **characterized in that** the sheet metal material (52) is connected in form-fitted manner or hooked to the undercut feature (20, 102) or to the undercut features (20, 102).

21. Component assembly in accordance with claim 20, **characterized in that** the sheet metal material (52) is connected in form-fitted manner or hooked to the features (26, 28, 48, 50) providing security against rotation for the transmission of torques acting around the longitudinal axis of the functional element and **in that** the sheet metal part (52) is not perforated or holed at any point in the region of the joint connection to the head or body part (14) of the functional element; **in that** the sheet metal part (52) is received in pot-like manner within the hollow space (18) and is hooked in the base region of the pot in form-fitted manner behind the undercut feature (20) or the undercut features (20) and/or **in that** the head or body part (14) is arranged at least partly within a pot-like recess (70) of the sheet metal part (52).

22. Component assembly in accordance with claim 20 or 21, **characterized in that** the sheet metal part (52) is optionally coated at one side or at both sides with a metal coating and/or with a plastic coating and/or with a foil coating and/or with a paint coating and the coating is not damaged by the joining method or is at most damaged at points clamped between the functional element (10) and the sheet metal part (52).

23. Die button (60), in particular for use in a method in accordance with one of the claims 1 to 5 for the attachment of a functional element (10) in accordance with any one of the claims 6 to 19 and for the formation of a component assembly in accordance with any one of the claims 20 to 22, wherein the die button has a recess (68) at the end face confronting the sheet metal part (52) with a peripheral wall extending parallel to the longitudinal axis (24) of the die button or a peripheral wall (84) slightly diverging in the direction of the end face (64) of the die button facing the sheet metal part, the peripheral wall (84) of the recess (68) can be circularly round, oval, polygonal or provided with longitudinal noses in cross-section and merges via a rounded edge (82) into the planar end face (64) of the die button,
**characterized in that** the die button has a cylindrical projection within its recess (68) which projects in the direction of the end face of the die button (60) facing the sheet metal part (52) and has an at least substantially planar end face, with the cylindrical projection (72) merging via a rounded shaping edge (116) into its cylindrical side wall, with the end face (114) of the projection (72) being lower than the end face (64) of the die button (60) surrounding the recess (68), or **in that** the die button has within its recess (68) a cylindrical projection (72) projecting in the direction of the end face (64) of the die button facing the sheet metal part (52), with the end (76) of the cylindrical projection (72) being at least substantially conically shaped and with the tip of the conical end being rounded.

24. Die button (60), in particular for use in a method in accordance with one of the claims 1 or 2 for the attachment of the functional element in accordance with claim 6 and for the formation of a component assembly in accordance with one of the claims 20 to 22, **characterized in that** it has a cylindrical projection (72), the end (76) of which is at least substantially of conical shape and **in that** the die button is formed with exclusively rounded shaping edges in the regions which enter into contact with the sheet metal part.

25. Die button in accordance with one of the claims 23 or 24, **characterized in that** the conical end face of the cylindrical projection (72) merges via a rounded ring recess (78) and a rounded ring nose (80) arranged around it into the cylindrical side wall of the projection (72).

## Revendications

1. Procédé pour l'agencement étanche, en particulier étanche aux liquides et/ou aux gaz, d'un élément fonctionnel (10), en particulier d'un élément fonctionnel constitué par une partie de tige (12) et par une partie de tête ou de corps (14), sur une pièce en tôle (52), dans lequel l'élément (10) ne traverse pas le matériau de tôle (52) mais est fixé sur cette pièce en tôle pour transmettre des forces axiales et de préférence également des couples de rotation, la pièce en tôle (52) est reliée, sans la perforer, par coopération de formes à la partie de tête (14) ou, lors de l'utilisation d'un élément à corps creux, à sa partie de corps (14), par application d'une force entre une tête de pose (54) agencée sur un côté de la pièce en tôle (52) et guidant l'élément fonctionnel (10) et une matrice de mise en forme (60) agencée sur l'autre côté de la pièce en tôle, l'élément (10) est relié à la pièce en tôle (52) par assemblage par mise en forme, et la partie de tête ou de corps (14) est réalisée avec des arêtes de mise en forme arrondies (38, 42, 100) et la matrice de mise en forme (60) est réalisée exclusivement avec des arêtes de mise en forme arrondies dans les zones qui viennent en contact avec la pièce en tôle, **caractérisé en ce que** pour établir la liaison en coopération de formes, la partie de tête ou de corps (14) est réalisée avec une cavité (18) ouverte sur sa face frontale (22) tournée vers la pièce en tôle (52), cavité qui présente au moins une caractéristique de contre-dépouille (20), et **en ce que** le matériau de tôle est accroché avec cette caractéristique de contre-dépouille (20) au moyen de la matrice de mise en forme (60).

2. Procédé selon la revendication 1, **caractérisé en ce qu'**une paroi annulaire (30) en saillie est prévue à l'intérieur de la cavité (18) dans la zone de sa surface de fond, qui est évasée radialement vers l'extérieur au-delà du matériau de tôle par la matrice de mise en forme (60) et qui pousse le matériau de tôle contre la paroi intérieure de la cavité (18) au-dessus de la caractéristique de contre-dépouille (20).

3. Procédé selon la revendication 1, **caractérisé en ce que** pour établir la liaison en coopération de formes de la partie de tête ou de la partie de corps (14) avec la pièce en tôle (52), la partie de tête ou la partie de corps comprend sur sa périphérie extérieure au moins une caractéristique de contre-dépouille (102) avec laquelle le matériau de tôle est accroché, et **en ce qu'**au choix le matériau de la partie de tête ou de corps (14) de l'élément fonctionnel est déformé au moyen de la tête de pose pour réaliser l'accrochage.

4. Procédé selon l'une des revendications précédentes, **caractérisé en ce que** la pièce en tôle (52) est revêtue sur un côté ou sur deux côtés par exemple par un revêtement métallique et/ou par un revêtement en matière plastique et/ou en film ou en laque, et **en ce que** le procédé de mise en forme est mis en oeuvre par utilisation d'arêtes de formage arrondies (38, 42, 100 ; 78, 80, 82, 86) aussi bien dans l'élément (10) que sur la matrice (60).

5. Procédé selon l'une des revendications précédentes, **caractérisé en ce que** des caractéristiques de blocage anti-rotation (20, 26, 48, 50) sont prévues dans la cavité (18) de la partie de tête ou de corps (14) et/ou sur la paroi annulaire et/ou sur la face frontale (22) de la partie de tête ou de corps (14) tournée vers la pièce en tôle et/ou à la périphérie extérieure de la partie de tête ou de corps (14), le cas échéant uniquement dans la zone inférieure de celle-ci, et **en ce que** le matériau de tôle est noyé en coopération de formes dans les caractéristiques de blocage anti-rotation (20, 26, 48, 50).

6. Élément fonctionnel (10) comportant une partie de tige (12) et une partie de tête (14) ou une partie de corps creuse (14) pour l'agencement étanche, en particulier étanche aux liquides et/ou aux gaz, sur une pièce en tôle (52), sans traverser ou perforer la pièce en tôle, dans lequel la partie de tête ou de corps (14) présente, dans une cavité (18) ouverte sur sa face frontale (22) tournée vers la pièce en tôle (52), au moins une caractéristique de contre-dépouille (20), et la cavité (18) ouverte du côté frontal est délimitée par une paroi périphérique continue, **caractérisé en ce que** la paroi périphérique comprend plusieurs caractéristiques de contre-dépouille (20) qui sont formées par des becs (28) qui font saillie depuis la paroi périphérique de la cavité (18) vers cette dernière, **en ce que** les caractéristiques de contre-dépouille (20) sont réalisées par des renfoncements (26) enfoncés à des emplacements correspondants sur la surface frontale de la partie de tête ou de corps, qui servent à la fois de caractéristiques de blocage anti-rotation, et **en ce que** la transition (38) de la surface frontale plane (32) d'une paroi annulaire (30) prévue dans la cavité ouverte (18) ou d'une saillie cylindrique prévue ici vers la paroi extérieure cylindrique (40) de la paroi annulaire (30), ainsi que la transition (42) de la face frontale (22) vers la surface périphérique de la partie de tête (14) et la transition (100) de la cavité cylindrique (18) vers la face frontale (22) sont formées par des arêtes de mise en forme arrondies (38, 42, 100).

7. Élément fonctionnel selon la revendication 6, **caractérisé en ce qu'**une autre caractéristique de contre-dépouille (102) est formée par un bec annulaire (104) faisant saillie vers l'extérieur sur la zone, voisine de la face frontale libre (44), de la périphérie extérieure de la partie de tête ou de corps (14) et par un renfoncement, en particulier un renfoncement annulaire (102), prévu entre ce bec annulaire (104) et l'autre face frontale (22) de la partie de tête ou de corps (14) dans la zone de la paroi périphérique de celle-ci.

8. Élément fonctionnel selon la revendication 7, **caractérisé en ce qu'**un bourrelet annulaire périphérique arrondi (108) est prévu entre le bec annulaire (104) et le renfoncement (102).

9. Élément fonctionnel selon la revendication 8, **caractérisé par** plusieurs renfoncements qui se situent entre le bec annulaire (104) et l'autre face frontale (22) de la partie de tête ou de corps (14) dans sa périphérie extérieure et qui forment chacun une autre caractéristique de contre-dépouille (102).

10. Élément fonctionnel selon l'une des revendications 6 à 9, **caractérisé en ce qu'**il est prévu, à l'intérieur de la cavité (18), une paroi annulaire (30) agencée sur sa surface de fond et faisant saillie en direction de la face frontale (22) tournée vers la pièce en tôle (52), paroi qui, en allant en direction de cette face frontale, se termine par une propre face frontale (32) en avant de l'emplacement le plus étroit de la cavité, qui est formé par les caractéristiques de contre-dépouille (20).

11. Élément fonctionnel selon la revendication 10, **caractérisé en ce que** la face frontale (32) de la paroi annulaire (30) est formée sur le côté intérieur par un chanfrein (34) ou par une arête arrondie.

12. Élément fonctionnel selon la revendication 10, **caractérisé en ce que** la face frontale de la paroi annulaire (30) présente une surface plane circulaire (32) qui s'étend au moins sensiblement perpendiculairement à l'axe longitudinal (24) de l'élément (10).

13. Élément fonctionnel selon la revendication 12, **caractérisé en ce que** la surface plane (32) sur la face frontale de la paroi annulaire (30) se transforme de préférence via une arête arrondie (38) en sa paroi extérieure cylindrique ou conique (40).

14. Élément fonctionnel selon l'une des revendications 6 à 13, **caractérisé en ce que** les caractéristiques de blocage anti-rotation (48, 50) sont agencées sur la face frontale (32) de la paroi annulaire (30) et/ou sur la périphérie extérieure de la partie de tête ou de corps (14), par exemple dans la zone de la face frontale (22) tournée vers la pièce en tôle (52) de la périphérie extérieure de la partie de tête ou de corps, et/ou elles sont formées par une forme polygonale ou rainurée de la partie de tête ou de corps.

15. Élément fonctionnel (10) comportant une partie de tige (12) et une partie de tête (14) ou une partie de corps creuse (14) pour l'agencement étanche, en particulier étanche aux liquides et/ou aux gaz, sur une pièce en tôle (52), sans traverser ou perforer la pièce en tôle, dans lequel la partie de tête ou de corps (14) présente, dans une cavité (18) ouverte sur sa face frontale (22) tournée vers la pièce en tôle (52), un bec annulaire (28) formant le cas échéant une contre-dépouille (20), et la cavité (18) ouverte du côté frontal est délimitée par une paroi périphérique continue, **caractérisé en ce que** la transition (38) de la surface frontale plane (32) d'une paroi annulaire (30) prévue dans la cavité ouverte (18) ou d'une saillie cylindrique prévue ici vers la paroi extérieure cylindrique (40) de la paroi annulaire (30), ainsi que la transition (42) de la face frontale (22) vers la surface périphérique de la partie de tête (14) et la transition (100) de la cavité cylindrique (18) vers la face frontale (22) sont formées par des arêtes de mise en forme arrondies (38, 42, 100), et **en ce qu'**une autre caractéristique de contre-dépouille (102) est formée par un bec annulaire (104) faisant saillie vers l'extérieur sur la zone, voisine de la face frontale libre (44), de la périphérie extérieure de la partie de tête ou de corps (14) et par un renfoncement, en particulier un renfoncement annulaire (102), prévu entre ce bec annulaire (104) et l'autre face frontale (22) de la partie de tête ou de corps (14) dans la zone de la paroi périphérique de celle-ci.

16. Élément fonctionnel selon la revendication 15, **caractérisé en ce qu'**un bourrelet annulaire périphérique arrondi (108) est prévu entre le bec annulaire (104) et le renfoncement (102).

17. Élément fonctionnel selon la revendication 16, **caractérisé par** plusieurs renfoncements qui se situent entre le bec annulaire (104) et l'autre face frontale (22) de la partie de tête ou de corps (14) dans sa périphérie extérieure et qui forment chacun une autre caractéristique de contre-dépouille (102).

18. Élément fonctionnel selon l'une des revendications 6 à 17, **caractérisé en ce que** la partie de tige (12) est munie d'un pas de vis (16) ou d'une configuration similaire à un pas de vis ou encore d'une gorge périphérique ou de plusieurs gorges périphériques, présentant par exemple une forme en sapin, vue en coupe longitudinale, ou d'autres caractéristiques de forme, et **en ce que** la configuration choisie de la partie de tige (12) est susceptible d'être reliée à un élément correspondant coopérant avec l'élément fonctionnel.

19. Élément fonctionnel selon l'une des revendications 6 à 17, **caractérisé en ce qu'**il est réalisé sous forme d'élément à corps creux.

20. Pièce d'assemblage, réalisée en particulier par le procédé selon l'une des revendications 1 à 5, constituée par une pièce en tôle (52) et par un élément fonctionnel (10) selon l'une des revendications 6 à 19, **caractérisée en ce que** le matériau de tôle (52) est relié en coopération de formes ou accroché avec la caractéristique de contre-dépouille (20, 102) ou avec les caractéristiques de contre-dépouille (20, 102).

21. Pièce d'assemblage selon la revendication 20, **caractérisée en ce que** le matériau de tôle (52) est relié en coopération de formes ou accroché avec les caractéristiques de blocage anti-rotation (26, 28, 48, 50) pour transmettre des couples de rotation agissant autour de l'axe longitudinal de l'élément fonctionnel, et **en ce que** la pièce en tôle (52) n'est perforée ou trouée à aucun emplacement dans la zone de la liaison assemblée avec la partie de tête ou de corps (14) de l'élément fonctionnel (10), **en ce que** la pièce en tôle (52) est reçue à la manière d'un pot à l'intérieur de la cavité (18) et est accrochée dans la zone de fond du pot en coopération de formes derrière la caractéristique de contre-dépouille (20) ou les caractéristiques de contre-dépouille (20), et/ou **en ce que** la partie de tête ou de corps (14) est agencée au moins en partie à l'intérieur d'un renfoncement (70) en forme de pot de la pièce en tôle (52).

22. Pièce d'assemblage selon l'une ou l'autre des revendications 20 et 21, **caractérisée en ce que** la pièce en tôle (52) est revêtue au choix sur un côté ou sur deux côtés, par un revêtement métallique et/ou par un revêtement en matière plastique et/ou en film ou en laque, et **en ce que** le revêtement n'est pas endommagé par le procédé d'assemblage ou tout au plus à des emplacements serrés entre l'élément fonctionnel (10) et la pièce en tôle (52).

23. Matrice (60), en particulier pour l'utilisation dans un procédé selon l'une des revendications 1 à 5 pour l'agencement d'un élément fonctionnel (10) selon l'une des revendications 6 à 19 et pour la formation d'une pièce d'assemblage selon l'une des revendications 20 à 22, la matrice présentant sur la face frontale tournée vers la pièce en tôle (52) un renfoncement (68) avec une paroi périphérique (84) qui s'étend parallèlement à l'axe longitudinal (24) de la matrice ou qui diverge légèrement en direction de la face frontale (64), tournée vers la pièce en tôle, de la matrice, la paroi périphérique (84) du renfoncement pouvant présenter une section transversale circulaire, ovale, polygonale ou être pourvue de becs allongés et se transformant via une arête arrondie (82) en la surface frontale plane (64) de la matrice, **caractérisée en ce que** la matrice comprend à l'intérieur de son renfoncement (68) une saillie cylindrique (72) qui dépasse en direction de la face frontale (64), tournée vers la pièce en tôle (52), de la matrice (60) et qui comprend une face frontale au moins sensiblement plane et qui se transforme via une arête de formage arrondie (116) en sa paroi latérale cylindrique, la face frontale (114) de la saillie (72) étant plus basse que la face frontale (64) entourant le renfoncement (68) de la matrice (60), ou **en ce que** la matrice comprend à l'intérieur de son renfoncement (68) une saillie cylindrique (72) qui dépasse en direction de la face frontale (64), tournée vers la pièce en tôle (52), de la matrice (60) et dont l'extrémité frontale (76) est réalisée au moins sensiblement en forme conique et la pointe de l'extrémité frontale conique est arrondie.

24. Matrice (60), en particulier pour l'utilisation dans un procédé selon l'une ou l'autre des revendications 1 et 2 pour l'agencement d'un élément fonctionnel selon la revendication 6 et pour la formation d'une pièce d'assemblage selon l'une des revendications 20 à 22, **caractérisée en ce qu'**elle comprend une saillie cylindrique (72) qui est entourée par une surface frontale plane annulaire (64) et qui dépasse en direction de la pièce en tôle (52) et dont l'extrémité frontale (76) est réalisée au moins sensiblement en forme conique et les zones venant en contact avec la pièce en tôle sont réalisées exclusivement avec des arêtes de mise en forme arrondies.

25. Matrice selon l'une ou l'autre des revendications 23 et 24, **caractérisée en ce que** l'extrémité frontale conique de la saillie cylindrique (72) se transforme via un renfoncement annulaire arrondi (78) et via un bec annulaire arrondi (80) agencé autour de celui-ci en la paroi latérale cylindrique de la saillie (72).
